# EUROPÄISCHE PATENTANMELDUNG

(11) **EP 3 900 587 A1**
(43) Veröffentlichungstag der Anmeldung: **27.10.2021**
(21) Anmeldenummer: 21161471.4
(22) Anmeldetag: 09.03.2021
(51) Int. Cl.: A47J 44/00, A47J 44/02, A47J 43/044, F24C 15/18

(54) **KOCHSYSTEM UND EINE KOCHEINRICHTUNG**

(30) Priorität: 21.04.2020 DE 102020204999
(71) Anmelder: E.G.O. Elektro-Gerätebau GmbH, 75038 Oberderdingen (DE)
(72) Erfinder: Zarcone, Carmelo, 75038 Oberderdingen (DE); Seidler, Christian, 75015 Bretten (DE)
(74) Vertreter: Patentanwälte Ruff, Wilhelm, Beier, Dauster & Partner mbB

(57) **Zusammenfassung**

Die Erfindung betrifft ein Kochsystem (1) umfassend ein Basismodul (2) mit einem Antriebsmotor (20) und einem Antriebsarm (22), wobei der Antriebsarm (22) eine Kupplung (21) zur lösbaren Verbindung eines Werkzeugs (4) mit dem Antriebsmotor (20) aufweist, und wobei das Basismodul (2) einer Kochzone (50) eines Kochfelds (5) zugeordnet ist, sodass der Antriebsarm (22) oberhalb der Kochzone (50) anordenbar ist, um mittels eines mit der Kupplung des Antriebsarm (22) gekoppelten Werkzeugs (4) auf ein Medium in einem an der Kochzone (50) angeordneten Behälter (6) einzuwirken, wobei das Basismodul (2) an einem Gehäuse (10) angeordnet ist, und wobei das (10) Gehäuse an dem Kochfeld (5) zwischen einer Verstauposition und einer Gebrauchsposition in vertikaler Richtung verfahrbar, in horizontaler Richtung ausziehbar und/oder um eine Schwenkachse einklappbar verbaut ist. Die Erfindung betrifft weiter eine Kücheneinrichtung mit einem Kochsystem (1).

## Beschreibung

Die Erfindung betrifft ein Kochsystem umfassend ein Basismodul mit einem Antriebsmotor und einem Antriebsarm, wobei der Antriebsarm eine Kupplung zur lösbaren Verbindung eines Werkzeugs mit dem Antriebsmotor aufweist, und wobei das Basismodul einer Kochzone eines Kochfelds zugeordnet ist, sodass der Antriebsarm oberhalb der Kochzone anordenbar ist, um mittels eines mit der Kupplung des Antriebsarm gekoppelten Werkzeugs auf ein Medium in einem an der Kochzone angeordneten Behälter einzuwirken. Die Erfindung betrifft weiter eine Kücheneinrichtung mit einem Kochsystem.

Um verschiedene Funktionen bei der Zubereitung von Speisen zu ermöglichen, sehen sich insbesondere private Nutzer von Küchen häufig gezwungen, verschiedene Geräte unterschiedlicher Anbieter zu beziehen. Mit der Zeit sammeln sich bei privaten Nutzern daher häufig verschiedene Geräten, wie Waagen, Handmixer, Toaster, Brotbackautomat, Kaffee-Teemaschine, Fritteuse etc. an. Gerade bei kleineren Küchen kann dies zu massiven Platzproblemen auf der Arbeitsplatte führen. Sofern mehrere Geräte gleichzeitig zum Einsatz kommen sollen, ist deren Benutzung teilweise mit Schwierigkeiten verbunden, da die Geräte oft an verschiedenen Stellen stehen, nicht ausreichend Steckdosen vorhanden sind oder nur bedingt geeignete Platzverhältnisse herrschen. Aufgrund der Platzprobleme auf der Arbeitsplatte werden die Geräte auch häufig in Schränken verstaut und müssen für einen Gebrauch erst aus dem Schrank geholt und zusammengebaut werden.

Es werden weiter auch Küchengeräte angeboten, welche verschiedene Funktionen, wie Rühren, Mixen und Wiegen oder auch Koch- und/oder Garfunktionen beinhalten. Diese Geräte haben jedoch in der Regel einen erheblichen Platzbedarf.

Aus DE 10 2014 009 195 A1 ist eine Küchenmaschine mit zumindest einem Küchenwerkzeug bekannt, die wenigstens eine Zentraleinheit hat, wobei der Zentraleinheit zumindest ein Auslegerarm zugeordnet ist und der Auslegerarm wenigstens eine Aufnahmeeinrichtung für das Küchenwerkzeug hat, und wobei die Zentraleinheit Mittel zu ihrem Befestigen in der Nähe eines Küchenherdes hat.

Es ist eine Aufgabe der Erfindung, ein verbessertes Kochsystem und eine verbesserte Kücheneinrichtung mit einem Kochsystem zu schaffen.

Diese Aufgabe wird gelöst durch das Kochsystem mit den Merkmalen des Anspruchs 1 und eine Kücheneinrichtung mit den Merkmalen des Anspruchs 14. Vorteilhafte Ausgestaltungen ergeben sich aus den Unteransprüchen.

Gemäß einem ersten Aspekt wird ein Kochsystem umfassend ein Basismodul mit einem Antriebsmotor und einem Antriebsarm geschaffen, wobei der Antriebsarm eine Kupplung zur lösbaren Verbindung eines Werkzeugs mit dem Antriebsmotor aufweist, wobei das Basismodul einer Kochzone eines Kochfelds zugeordnet ist, sodass der Antriebsarm oberhalb der Kochzone anordenbar ist, um mittels eines mit der Kupplung des Antriebsarm gekoppelten Werkzeugs auf ein Medium in einem an der Kochzone angeordneten Behälter einzuwirken, wobei das Basismodul an einem Gehäuse angeordnet ist, wobei das Gehäuse an dem Kochfeld zwischen einer Verstauposition und einer Gebrauchsposition in vertikaler Richtung verfahrbar, in horizontaler Richtung ausziehbar und/oder um eine Schwenkachse einklappbar verbaut ist.

Das Gehäuse mit dem Basismodul ist somit bei einem Nichtgebrauch in eine Verstauposition bewegbar, in welcher das Basismodul nicht sichtbar ist - oder zumindest nicht einen ästhetischen Eindruck einer Küche beeinträchtigend sichtbar ist - und in welcher das Basismodul vor einer Zerstörung oder Verschmutzung geschützt ist.

Als Kupplungen werden im Zusammenhang mit der Anmeldung Verbindungseinrichtungen bezeichnet, mittels welchen Bewegungen von einer Antriebswelle des Kochsystems auf eine Abtriebswelle des Werkzeugs oder eines anderen Zubehörs übertragbar sind.

Als Werkzeuge sind unterschiedliche Küchenwerkzeuge vorsehbar, beispielsweise Rührlöffel, Rührbesen, Knethaken, Schneidmesser sowie Zangen zum Ergreifen von Zutaten. In Ausgestaltungen des Kochsystems weist das Gehäuse eine Aufbewahrungsvorrichtung für nicht im Einsatz befindliche Werkzeuge auf. Die Werkzeuge sind so bei einem Nichtgebrauch des Kochsystems sicher verstaut.

Die Antriebswelle ist in einer Ausgestaltung stationär drehbar gelagert, wobei ein mit der Antriebswelle gekoppeltes Werkzeug im Gebrauch mittels des Antriebsmotors um seine Längsachse rotierbar ist. In einer anderen Ausgestaltung ist die Antriebswelle nicht stationär gelagert, sondern beispielsweise an einem Planetenrad eines Planetengetriebes vorgesehen, wobei das Werkzeug zusätzlich zu einer Rotationsbewegung um die Achse der Abtriebswelle zu einer umlaufenden Bewegung entlang einer Umfangsrichtung des Behälters antreibbar ist.

Im Zusammenhang wird der Anmeldung werden die Wörter "ein", "eine", "eines", etc. lediglich als unbestimmte Artikel verwendet und sollen nicht als Zahlwort interpretiert werden. Insbesondere kann das Basismodul in einer Ausgestaltung mehrere Antriebsarme umfassen, welche beispielsweise Kupplungen mit zueinander nicht parallelen Drehachsen aufweisen. Alternativ oder zusätzlich kann ein Antriebsarm mehrere Kupplungen aufweisen. Dabei sind in einer Ausgestaltung an einem Antriebsarm zwei Kupplungen für paarweise verwendete Werkzeuge, wie Rührbesen oder Knethaken vorgesehen.

Der Antriebsarm ist in einer Ausgestaltung an dem Gehäuse zwischen einer Ruheposition und einer Nutzposition bewegbar gelagert, wobei der Antriebsarm insbesondere in einer Ausgestaltung um eine horizontale Achse verschwenkbar und in vertikaler Richtung verstellbar gelagert ist. Die Ruheposition ist dabei derart gewählt, dass der Antriebsarm möglichst vollständig durch das Gehäuse eingehaust ist und ein Platzbedarf des Antriebsarms für eine Aufnahme durch das Gehäuse minimiert ist. In der Nutzposition ragt der Antriebsarm in einer Ausgestaltung von dem Gehäuse ab, sodass eine Kupplung des Antriebsarms im Bereich der Kochzone oberhalb eines dort angeordneten Behälters anordenbar ist.

In einer Ausgestaltung weist die Kochzone Fixiereinrichtungen auf, mittels welchen ein Behälter, insbesondere ein Kochtopf, in der Kochzone fixierbar ist. Die Fixiereinrichtung umfasst beispielsweise eine Magnethalterung.

In einer anderen Ausgestaltung ist zusätzlich oder alternativ an dem Gehäuse des Kochsystems eine Fixiereinrichtung vorgesehen, mittels welcher ein Behälter in der Gebrauchsposition des Gehäuses im Bereich der Kochzone fixierbar ist. Die Fixiereinrichtung ist somit mit dem Gehäuse in eine Verstauposition verstellbar und so bei Nichtgebrauch des Kochsystems nicht oder zumindest nicht störend sichtbar. Die Fixiereinrichtung weist in einer Ausgestaltung zwei Haltearme auf, wobei ein Behälter zwischen den Haltearmen klemmbar ist. Alternativ oder zusätzlich umfasst die Fixiereinrichtung in einer Ausgestaltung einen Haken, in welchen ein Henkel des Behälters oder eine ähnliche Vorrichtung einhängbar ist. Die Haltearme und/oder der Haken weisen in einer Ausgestaltung zusätzlich Magneten für eine Fixierung des Behälters auf. In einer Ausgestaltung umfasst die Fixiereinrichtung eine Dreheinrichtung, mittels welcher ein mittels der Fixiereinrichtung fixierter Behälter bedarfsweise um eine Achse verdrehbar oder verschwenkbar ist. In einer Ausgestaltung ist dabei vorgesehen, dass der Behälter um eine horizontale Achse zum Wenden eines Behälterinhalts verschwenkbar ist. In anderen Ausgestaltungen ist der Behälter um eine vertikale Achse verschwenk- oder verdrehbar. Um ein Drehen, insbesondere um eine vertikale Achse, zu ermöglichen, ist in einer Ausgestaltung vorgesehen, dass der mittels der Fixiereinrichtung fixierte Behälter in vertikaler Richtung relativ zu der Kochzone bewegbar ist.

In einer Ausgestaltung ist eine Wiegeeinrichtung umfassend einen vertikal verfahrbaren Schlitten und eine Wägezelle vorgesehen, wobei für ein Wiegen ein Behälter mittels des Schlittens in vertikaler Richtung relativ zu der Kochzone bewegbar ist, um den Behälter von der Kochzone anzuheben. Die Wiegeeinrichtung ist in einer Ausgestaltung Teil der Fixiereinrichtung, wobei Haltearme oder Haken zum Fixieren des Behälters an dem Schlitten vorgesehen sind. Der Schlitten ist dabei vorzugsweise derart gelagert, dass Hebelkräfte, welche die Gewichtsmessung beeinträchtigen könnten, vermieden werden. Ein Antrieb des Schlittens erfolgt in einer Ausgestaltung mittels des Antriebsmotors des Basismoduls. In einer anderen Ausgestaltung ist ein separater Antriebsmotor für die Wiegeeinrichtung vorgesehen.

In einer Ausgestaltung ist an dem Antriebsarm ein Deckel vorgesehen, mittels welchem in einer Nutzposition des Antriebsarms ein an der Kochzone angeordneter Behälter ganz oder teilweise abdeckbar ist. Der Deckel dient in einer Ausgestaltung auch einer Fixierung des Behälters in der Kochzone. In einer Ausgestaltung ist der Behälter mittels des Deckels luft- und wasserdicht abschließbar, so dass ein Kochen mittels Dampfdruck möglich ist. Der Deckel weist dabei ein Sicherheitsventil auf. Alternativ oder zusätzlich kann der Deckel wahlweise luft- und wasserdicht oder lediglich auf dem Behälter aufliegend angeordnet werden.

In einer Ausgestaltung weist das Kochsystem eine Gerätekupplung für ein Zusatzgerät ausgewählt aus der nicht abschließenden Gruppe umfassend einen Mixer, eine Saftpresse, eine flexible Welle, einen Gemüsezerkleinerer, einen Fleischwolf, einen Messerschärfer, einen Dosenöffner, auf. Die Gerätekupplung ist in einer Ausgestaltung an dem Antriebsarm vorgesehen und mit dem Antriebsmotor des Basismoduls gekoppelt. In einer anderen Ausgestaltung ist alternativ oder zusätzlich ein weiterer Antriebsarm vorgesehen, wobei die Gerätekupplung mit einem separaten Antriebsmotor oder mit dem Antriebsmotor des ersten Antriebsarms gekoppelt ist. In wieder einer anderen Ausgestaltung ist alternativ oder zusätzlich Gerätekupplung stationär an dem Gehäuse angeordnet.

Die Zusatzgeräte können dabei jeweils einfach gestaltet werden und benötigen keine eigene Aktuatorik und/oder Sensorik. Dabei ist es insbesondere möglich Zusatzgeräte zu schaffen, welchen kleinbauend und spülmaschinengeeignet sind. In Ausgestaltungen des Kochsystems weist das Gehäuse eine Aufbewahrungsvorrichtung für die Zusatzgeräte bei einem Nichtgebrauch auf.

In einer Ausgestaltung erfolgt eine manuelle Aktivierung des Antriebsmotors mit einem damit verbundenen Werkzeug und/oder Zusatzgerät durch einen Nutzer. Ein Bedienelement für das Werkzeug ist dabei in einer Ausgestaltung in eine Nutzerschnittstelle des Kochfelds integriert. Eine Energieversorgung für den Antriebsmotor erfolgt dabei in einer Ausgestaltung ebenfalls über ein Energieversorgungsmodul des Kochfelds.

Alternativ oder zusätzlich ist eine Steuereinheit zum Ansteuern des Antriebsmotors vorgesehen, wobei an der Steuereinheit ein Betriebsparameter der Kochzone vorliegt und der Betriebsparameter für ein Ansteuern des Antriebsmotors auswertbar ist. In einer Ausgestaltung liegen mehrere Betriebsparameter der Kochzone an der Steuereinheit vor. Beispielsweise ist in einer Ausgestaltung vorgesehen, dass der Antriebsmotor abhängig von einem Energieeintrag an der Kochzone aktiviert oder deaktiviert, beschleunigt oder verlangsamt wird. Dabei ist in einer Ausgestaltung exakt eine zentrale Steuereinheit vorgesehen, mittels welcher sowohl die Kochzone als auch der Antriebsmotor betrieben werden. In anderen Ausgestaltungen sind mehrere Steuereinheiten vorgesehen, wobei die Steuereinheiten für eine Datenkommunikation miteinander verbunden sind. Eine Steuereinheit, an welcher für ein Ansteuern des Antriebsmotors ein Betriebsparameter der Kochzone auswertbar ist, ist sowohl in Kombination mit einem bewegbaren Gehäuse als auch bei einem stationär angeordneten Kochsystem vorteilhaft einsetzbar.

In einer Ausgestaltung sind mittels der Steuereinheit der Antriebsmotor und die Kochzone vollautomatisiert oder halbautomatisiert für eine Speisezubereitung in einem an der Kochzone angeordneten Behälter entsprechend einem Kochprogramm betreibbar sind, wobei vorzugsweise das Kochprogramm mittels einer Nutzerschnittstelle vorgebbar ist. Mittels der Nutzerschnittstelle ist dabei ein an der Steuereinheit oder in einer damit kommunizierten Speichereinheit gespeichertes Kochprogramm wählbar. In anderen Ausgestaltungen ist mittels der Nutzerschnittstelle ein Kochprogramm vorgebbar. Die Nutzerschnittstelle umfasst in einer Ausgestaltung eine Eingabeeinrichtung, insbesondere in Form einer berührungssensitiven Anzeigeeinrichtung. Alternativ oder zusätzlich umfasst die Nutzerschnittstelle einen Hardwareanschluss, insbesondere eine USB-Port, an welchen eine externe Speichereinrichtung anschließbar ist, und/oder eine Empfangseinrichtung für einen drahtlosen Datenempfang von einem externen Eingabegerät, wie beispielsweise einem mobilen Endgerät.

In einer Ausgestaltung ist vorgesehen, dass Medien wie Zutaten oder Hilfsstoffe wie Wasser oder dergleichen dem verwendeten Behälter durch einen Nutzer manuell zugefügt werden, wobei der Nutzer dabei in einer Ausgestaltung mittels visuell oder akustisch wahrnehmbarer Signale unterstützt wird.

In einer weiteren Ausgestaltung ist ein Portioniermodul vorgesehen, wobei das Portioniermodul eine Kammer zur Bevorratung einer Zutat aufweist und wobei das Portioniermodul mittels der Steuereinheit betreibbar ist, um die mindestens eine bevorratete Zutat einem an der Kochzone angeordneten Behälter zuzugeben. Vorzugsweise weist das Portioniermodul mehrere Kammern zur Bevorratung unterschiedlicher Zutaten auf, wobei die Zutaten zu Beginn eines Kochvorgangs und/oder beim Abarbeiten eines Kochprogramms bedarfsweise dem Behälter zuführbar sind. Dadurch ist ein vollautomatisierter Kochvorgang ohne Eingreifen eines Nutzers möglich.

In einer Ausgestaltung ist ein Überwachungsmodul, umfassend insbesondere eine optische Erfassungseinheit, vorgesehen, mittels welchem zumindest ein Vorhandensein oder Fehlen eines Behälters in der Kochzone feststellbar ist. Das Überwachungsmodul nutzt in einer Ausgestaltung an der Kochzone vorhandene Sensoren zur Erfassung eines Behälters.

In einer Ausgestaltung ist mittels des Überwachungsmoduls ein Behältertyp und/oder eine Art, eine Menge, eine Feuchtigkeit, eine Temperatur und/oder eine weitere Beschaffenheit eines Mediums in dem Behälter feststellbar. Je nach Gestaltung dient das Überwachungsmodul beispielsweise einer Topf und Benutzererkennung, einer voll- oder halbautomatisierten Wendefunktionen, einer voll- oder halbautomatisierten Grill-on-Point-Funktion, zur Realisierung von Sicherheitsfunktionen, beispielsweise als Überkochschutz, einer Rezeptüberwachung etc. In einer Ausgestaltung dient das Überwachungsmodul zur Durchführung eines Vakuum- oder Sous-Vide-Garens, wobei eine Temperatur in dem Behälter überwacht und gesteuert oder geregelt wird, wodurch punktgenaue Garpunkte erreicht werden können.

Das Überwachungsmodul weist je nach Ausgestaltung geeignete Sensoren und/oder bildgebenden Systeme auf. Als bildgebendes System ist in einer Ausgestaltung ein 3D-Kamerasystem, wie eine ToF-Kamera, vorgesehen. Alternativ oder zusätzlich ist in einer Ausgestaltung ein LIDAR-System unter Verwendung von Laserimpulsen und/oder ein Thermografie-System vorgesehen. Die Sensoren sind in einer Ausgestaltung an einem an dem Antriebsarm angeordneten, auf den Behälter aufsetzbaren Deckel angeordnet, wobei der an der Kochzone angeordnete Behälter mittels des Deckels teilweise oder vollständig abdeckbar ist.

Der Deckel ist dabei in einer Ausgestaltung an dem Antriebsarm angeordnet. In anderen Ausgestaltungen ist der Deckel als separates Element gestaltet.

In einer Ausgestaltung ist ein Anzeigemodul vorgesehen. Das Anzeigemodul ist beispielsweise ein an dem Kochfeld vorgesehenes Display. In einer Ausgestaltung ist an dem Anzeigemodul ein Behälterinhalt visualisierbar. In anderen Ausgestaltungen dient das Anzeigemodul einer Visualisierung bei einer Abarbeitung eines Kochprogramms. Alternativ oder zusätzlich sind die Daten auch an ein mobiles Endgerät übertragbar. Das Anzeigemodul und die Steuereinheit sind in einer Ausgestaltung als gemeinsames Modul gestaltet, wobei eine Anzeigeeinrichtung des Anzeigemoduls als Nutzerschnittstelle dient. Alternativ oder zusätzlich umfasst die Nutzerschnittstelle in einer Ausgestaltung einen Hardwareanschluss, welche den Anschluss weiterer Geräte ermöglicht. Der Hardwareanschluss dient in einer Ausgestaltung einer Energieversorgung zusätzlicher Kleingeräte. In anderen Ausgestaltungen dient der Hardwareanschluss alternativ oder zusätzlich der Integration zusätzlicher Aktuatoren und/oder Sensoren in das Kochsystem. Der Hardwareanschluss ist in einer Ausgestaltung ein USB-Port, wobei der USB-Port vorzugsweise auch zum Anschluss einer externen Speichereinrichtung nutzbar ist.

In einer Ausgestaltung ist ein Wechselmodul vorgesehen, mittels welchem ein mit der Kupplung verbindbares Werkzeug vollautomatisiert oder halbautomatisiert wechselbar ist. Das Wechselmodul umfasst dabei in einer Ausgestaltung einen mehrachsigen Roboterarm, welcher die Werkzeuge und ggf. auch ein Zusatzgerät selbstständig tauschen kann.

In einer Ausgestaltung ist Wasserzugabemodul vorgesehen, umfassend einen Wasserabgabeanschluss sowie einen mit dem Wasserabgabeanschluss verbundenen Wasserbehälter und/oder einen mit dem Wasserabgabeanschluss verbundenen Wasseranschluss für eine zentrale Wasserversorgung. Mittels des Wasserabgabeanschluss ist in einer Ausgestaltung Wasser oder eine andere Flüssigkeit dem Behälter bei der Durchführung eines Kochprogramms zuführbar. In einer Ausgestaltung sind zwei Wasserabgabeanschlüsse vorgesehen, mittels welcher Wasser oder eine andere Flüssigkeit mit unterschiedlichen Temperaturen dem Behälter zuführbar sind, wobei zu diesem Zweck ein Wasserabgabeanschluss über einen Durchlauferhitzer mit dem Wasserbehälter für eine Erwärmung des Wassers verbunden ist.

Gemäß einem zweiten Aspekt wird eine Kücheneinrichtung umfassend ein Kochfeld mit einer Kochzone und ein Kochsystem geschaffen, wobei das Basismodul des Kochsystems der Kochzone zugeordnet ist, sodass der Antriebsarm oberhalb der Kochzone anordenbar ist, um mittels eines mit der Kupplung des Antriebsarm gekoppelten Werkzeugs auf ein Medium in einem an der Kochzone angeordneten Behälter einzuwirken.

Bei dem Kochfeld handelt es sich in einer Ausgestaltung um ein Induktionskochfeld. In einer anderen Ausgestaltung ist ein Glaskeramik-Kochfeld vorgesehen. Die Kochzone weist in einer Ausgestaltung eine Wiegeeinrichtung auf.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der schematischen Figuren erläutert sind. Dabei zeigen:
- Fig. 1:: in einer perspektivischen Darstellung ein erstes Ausführungsbeispiel eines Kochsystems umfassend ein Basismodul, das einer Kochzone zugeordnet ist,
- Fig. 2(a) bis (f):: in einer Frontansicht das Kochsystem gemäß Fig. 1 in verschiedenen Positionen bei einem Überführen aus einer Verstauposition in eine Gebrauchsposition,
- Fig. 3:: in einer perspektivischen Darstellung ein zweites Ausführungsbeispiel eines Kochsystems umfassend ein Basismodul, das einer Kochzone zugeordnet ist,
- Fig. 4:: in einer Frontansicht ein Kochsystem ähnlich Fig. 3, und
- Fig. 5:: in einer Seitenansicht das Kochsystem gemäß Fig. 4.

Für gleiche oder ähnliche Bauteile werden in den Figuren einheitliche Bezugszeichen verwendet.

### DETAILLIERTE BESCHREIBUNG DER AUSFÜHRUNGSBEISPIELE

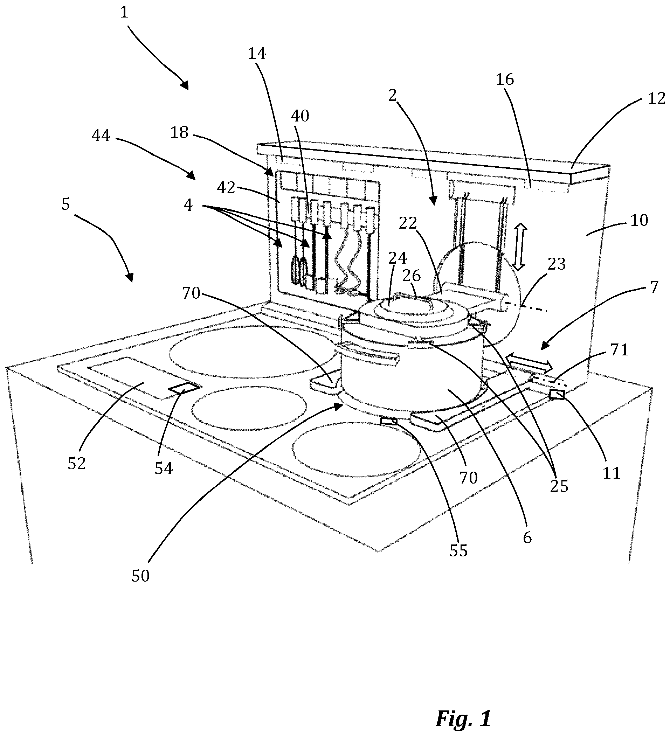

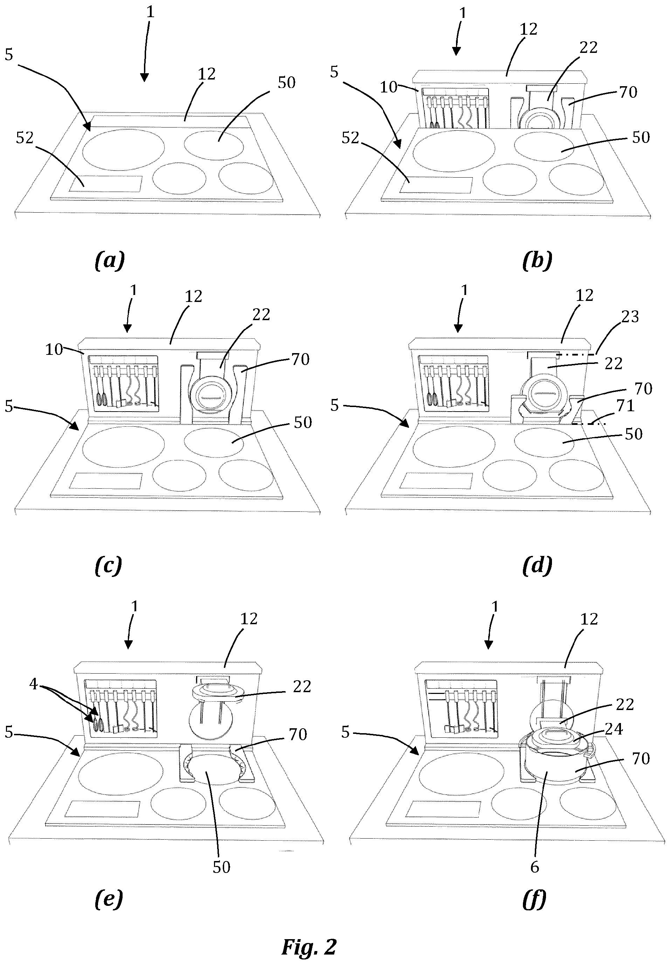

Fig. 1 und 2 zeigt schematisch ein erstes Ausführungsbeispiel eines Kochsystems 1 umfassend ein Basismodul 2 mit einem in Fig. 1 und 2 nicht sichtbaren Antriebsmotor und einem Antriebsarm 22. Der Antriebsmotor dient dem Antrieb verschiedener, austauschbar mit dem Antriebsmotor koppelbarer Werkzeuge 4 zum Kneten, Rühren oder dergleichen. Der Antriebsarm 22 weist zu diesem Zweck eine ebenfalls in Fig. 1 nicht sichtbare Kupplung zur Verbindung eines ausgewählten Werkzeugs 4 mit dem Antriebsmotor auf. Der Antriebsarm 22 ist in dem dargestellten Ausführungsbeispiel um eine horizontale Achse 23 verschwenkbar und - wie schematisch durch einen Doppelpfeil angedeutet - in vertikaler Richtung verstellbar an einem Gehäuse 10 gelagert ist. In einer anderen Ausgestaltung ist der Antriebsarm 22 um eine vertikale Achse verschwenkbar an dem Gehäuse gelagert.

Das Basismodul 2 ist einer Kochzone 50 eines Kochfelds 5 zugeordnet ist, d.h. das Basismodul 2 ist derart relativ zu der Kochzone 50 angeordnet, dass ein an dem Antriebsarm 22 angebrachtes Werkzeug 4 mit einem auf oder in der Kochzone 50 platzierten Behälter 6 zusammenwirken kann, um mittels des Werkzeugs 4 auf ein Medium in dem Behälter 6 einzuwirken, um so das Medium zu bearbeiten. Bei dem Werkzeug 4 handelt es sich beispielsweise um Rühr- oder Knethaken, welche paarweise benutzt werden, wobei das Werkzeugpaar im Zusammenhang mit der Anmeldung ebenfalls als Werkzeug 4 bezeichnet wird.

Für eine sichere Bearbeitung umfasst das Kochsystem 1 eine Fixiereinrichtung 7, mittels welcher der Behälter 6 im Bereich der Kochzone 50 fixierbar ist. In dem dargestellten Ausführungsbeispiel umfasst die Fixiereinrichtung 7 zwei beidseits des Behälters 6 angeordnete Haltearme 70, welche um eine horizontale Schwenkachse 71 verschwenkbar und - wie schematisch durch einen Pfeil angedeutet - entlang der Schwenkachse 71 verschieblich an dem Gehäuse 10 gelagert sind.

Die Fixiereinrichtung 7 für den Behälter 6 wirkt in einer Ausgestaltung mechanisch mit dem Behälter 6 zusammen, wobei in dem dargestellten Ausführungsbeispiel die Haltearme 70 der Fixiereinrichtung 7 jeweils Aussparungen aufweist, welche an die Form eine üblicherweise verwendeten Behälters 6 angepasst ist. Zusätzlich oder alternativ weisen der Behälter 6 und die Fixiereinrichtung in einer Ausgestaltung Verzahnungselemente auf, welche bei Fixieren des Behälters 6 formschlüssig ineinandergreifen.

In einer Ausgestaltung umfasst die Fixiereinrichtung 7 für den Behälter 6 mindestens einen nicht dargestellten Permanentmagneten und/oder einen Elektromagneten. In einer Ausgestaltung sind mehrere Permanentmagneten vorgesehen, welche in einem sogenannten Halbach-Array angeordnet sind. Als Halbach-Array wird eine lineare Anordnung von Permanentmagneten bezeichnet, die es ermöglicht, dass sich der magnetische Fluss auf der einen Seite der Anordnung fast aufhebt, auf der anderen Seite jedoch verstärkt. Die Permanentmagneten sind zu diesem Zweck jeweils um 90° in Richtung der Längsachse des Arrays relativ zu dem benachbarten Permanentmagneten gekippt. Dadurch stören sich die Magnetfelder, so dass die Feldlinien auf einer Seite enger zusammenrücken, wodurch an dieser Seite eine Erhöhung der magnetischen Flussdichte bewirkt wird. Auf der gegenüberliegenden Seite liegen die Feldlinien weniger eng als im ungestörten Magneten, daher wird hier das Feld schon in geringem Abstand abgeschwächt. Dadurch wird verhindert, dass mittels der Fixiereinrichtung 7 störende Anziehungskräfte auf Elemente außerhalb der Kochzone 50 aufgebracht werden. Für eine Trennung sind der Behälter 6 und die Fixiereinrichtung 7 in einer Ausgestaltung in eine Richtung quer zur Richtung der Anziehungskräfte bewegbar. In einer alternativen Ausgestaltung ist mindestens ein schaltbarer Elektromagnet vorgesehen.

In dem dargestellten Ausführungsbeispiel weist der Antriebsarm 22 einen auf dem Behälter 6 platzierbaren Deckel 24 auf. An dem dargestellten Deckel 24 sind Klemmarme 25 vorgesehen, welche in radialer Richtung des Deckels 24 verstellbar sind, um den Deckel 24 an einem oberen Rand des Behälters 6 zu fixieren. Für eine manuelle Bewegung der Klemmarme 25 zum Fixieren des Deckels 24 weist der dargestellte Deckel 24 ein Griff 26 auf, welcher beispielsweise um eine vertikale Achse zum Verstellen der Klemmarme 25 rotierbar ist. Der Deckel 24 ist in einer Ausgestaltung luft- und wasserdicht auf dem Behälter 6 anbringbar, sodass beispielsweise ein Kochen mittels Dampfdruck möglich ist. Der Deckel 24 weist dabei ein nicht dargestelltes Sicherheitsventil auf, das eventuellen Überdruck in dem Behälter 6 sicher abbauen kann.

Bei dem Behälter 6 handelt es sich in einer Ausgestaltung um einen handelsüblichen Kochtopf in einer marktüblichen Standardgröße. In anderen Ausgestaltungen ist der Behälter 6 an das Kochsystem 1 angepasst.

In dem dargestellten Ausführungsbeispiel ist an dem Gehäuse 10 eine Aufbewahrungsvorrichtung 44 für nicht in Gebrauch befindliche Werkzeuge 4 vorgesehen. In dem dargestellten Ausführungsbeispiel umfasst die Aufbewahrungsvorrichtung 44 eine Magnethalterschiene 40, an welcher Werkzeuge 4 mit einem magnetischen oder magnetisierbaren Abschnitt gehalten werden können. In dem dargestellten Ausführungsbeispiel ist im Bereich der Magnethalterschiene 40 eine Verkleidung 42 vorgesehen, welche aus einem leicht zu reinigenden Material, beispielsweise aus Edelstahl ist.

In das dargestellte Kochsystem 1 sind zudem weitere Funktionen integriert, welche im Bereich eines Kochfelds 5 nützlich sind. Diese Funktionen sind in dem dargestellten Ausführungsbeispiel eine Beleuchtung 14 und ein Dunstabzug 16, welche jeweils an einem oberen Ende an dem Gehäuse 10 angebracht sind, sowie ein Aufbewahrungssystem 18 für Zutaten oder Gewürze mit mehreren Kammern, beispielsweise in Form von Schubladeneinschüben.

Wie nachfolgend in Bezug auf Fig. 2 im Detail beschrieben, ist das Gehäuse 10 in dem dargestellten Ausführungsbeispiel an dem Kochfeld 5 zwischen einer Verstauposition und einer Gebrauchsposition in vertikaler Richtung verfahrbar verbaut, wobei das Gehäuse 10 hinter dem Kochfeld 5 versenkbar, d.h. in vertikaler Richtung verstellbar, gelagert ist. An einem oberen Ende des Gehäuses 10 ist eine Abschlussplatte 12 vorgesehen. Eine Gestaltung der Abschlussplatte 12 ist an ein Design des Kochfelds 5 anpassbar, sodass im Nichtgebrauch bei versenktem Gehäuse 10 eine ästhetisch ansprechende Lösung geschaffen wird, bei welchen das Kochsystem 1 nicht sichtbar und sicher vor einem unerwünschten Zugriff und/oder Verschmutzung geschützt ist. Um ein Einklemmen von Gegenständen und/oder Gliedmaßen bei einem Versenken des Gehäuses 10 zu verhindern, ist vorzugsweise eine Sicherheitseinrichtung 11 vorgesehen, umfassend beispielsweise eine Klemmschutz, eine Lichtschranke oder dergleichen.

An dem Kochfeld 5 ist eine Bedieneinrichtung 52 vorgesehen. In einer vorteilhaften Ausgestaltung ist auch eine Bedienung des Kochsystems 1 mittels dieser Bedieneinrichtung 52 möglich. In einer Ausgestaltung ist das Bedienfeld 52 mit einer schematisch dargestellten Steuereinheit 54 verbunden, mittels welcher eine Temperatur an der Kochzone 50 und/oder der Antriebsmotor zum Antreiben des damit gekoppelten Werkzeugs 4 steuer- und/oder regelbar ist. Die Bedieneinrichtung 52 fungiert in einer Ausgestaltung auch als Anzeigemodul, mittels welchem einem Nutzer zumindest eine Aktivierung einer Kochzone 50 anzeigbar ist. Die Steuereinheit 54 ist in einer Ausgestaltung derart eingerichtet, dass das Basismodul 2 und die Kochzone 50 vollautomatisiert oder halbautomatisiert für eine Speisezubereitung in einem an der Kochzone 50 fixierten Behälter 6 betreibbar sind. Dabei wird in einer Ausgestaltung ein Widerstand des in dem Behälter 6 befindlichen Mediums gegen eine Bewegung des auf das Medium einwirkenden Werkzeugs 4 erfasst. Der erfasste Widerstand wird an die Steuereinheit 54 rückgemeldet. Der erfasste Widerstand ist so durch die Steuereinheit 54 auswertbar, um beispielsweise eine Temperatur der Kochzone 50 und/oder eine Drehgeschwindigkeit des Werkzeugs 4 anzupassen.

Schließlich ist in dem dargestellten Ausführungsbeispiel an dem Kochfeld 5 noch eine Wiegeeinrichtung 55 vorgesehen, mittels welcher eine Gewichtskontrolle des Behälters 6 möglich ist. Die Wiegeeinrichtung 55 erlaubt eine einfache Kontrolle für ein Hinzufügen von Zutaten. Weiter ist mit der Wiegeeinrichtung 55 eine Überwachung der Speisen in der Speisezubereitung möglich. Die Wiegeeinrichtung 55 ist zu diesem Zweck vorzugsweise mit der Steuereinheit 54 für eine Datenübertragung verbunden. Alternativ oder zusätzlich sind in einer Ausgestaltung an den Haltearmen 70 Wägezellen vorgesehen. In einer Ausgestaltung ist das Kochfeld 5 als Induktionskochfeld gestaltet, wobei der Behälter 6 mittels der Haltearme 70 zumindest zeitweise beabstandet zu der Kochzone 50 für einen Wiegevorgang gehalten werden kann, ohne dass eine Hitzezufuhr für einen Kochvorgang unterbrochen wird. In einer Ausgestaltung ist vorgesehen, dass der Behälter 6 mittels der Haltearme 70 über den gesamten Kochvorgang oder eine definierte Phase in einem Kochvorgang angehoben verbleibt, wobei mittels der Wiegeeinrichtung 55 eine Änderung des Gewichts feststellbar und so eine Überwachung der Speisezubereitung möglich ist. So kann beispielsweise aus einem Gewichtsverlust aufgrund von Verdampfung festgestellt werden, dass eine Flüssigkeit in dem Behälter 6 kocht. Alternativ oder zusätzlich ist eine sogenannte "Boil-dry"-Funktion zum Schutz vor Überhitzung mittels der Wiegeeinrichtung 55 realisiert, wobei aus einem konstanten Gewicht trotz Hitzezufuhr geschlossen wird, dass eine in dem Behälter 6 vorhandene Flüssigkeit komplett verdampft ist. Um eine dann drohende Überhitzung zu vermeiden, wird in einer Ausgestaltung eine Energiezufuhr zu der Kochzone 50 unterbrochen.

Fig. 2 (a) bis (f) zeigen in einer Frontansicht das Kochsystem 1 mit einem Kochfeld 5 und ein Kochsystem 1 gemäß Fig. 1 in verschiedenen Positionen bei einem Überführen des Gehäuses 10 aus einer in Fig. 2 (a) dargestellten Verstauposition in eine in Fig. 2 (f) dargestellte Gebrauchsposition.

Wie oben beschrieben, ist das Gehäuse 10 des Kochsystems 1 in dem dargestellten Ausführungsbeispiel in vertikaler Richtung verstellbar und so das Kochsystem 1 in der in Fig. 2(a) dargestellten Verstauposition hinter dem Kochfeld 5 versenkbar, wobei lediglich die Abschlussplatte 12 sichtbar ist. Die Abschlussplatte 12 schließt dabei vorzugsweise bündig an das Kochfeld 5 an und ist in Form und Farbe an das Kochfeld 5 oder eine das Kochfeld 5 umgebenden Arbeitsplatte angepasst.

Das Kochsystem 1 ist aus der Verstauposition gemäß Fig. 2 (a) in die in Fig. 2 (f) dargestellte Gebrauchsposition überführbar. Zu diesem Zweck ist in einer Ausgestaltung ein motorischer Antrieb (nicht in Fig. 2 dargestellt) vorgesehen. Der motorische Antrieb ist beispielsweise mittels des Bedienfelds aktivierbar. In anderen Ausgestaltungen ist eine manuelle Verstelleinrichtung vorgesehen, wobei in einer Ausgestaltung eine Federeinrichtung, insbesondere umfassend eine Gasdruckfeder, vorgesehen ist, mittels welcher ein Nutzer in einer Verstellbewegung unterstützt ist.

Wie in Fig. 2 (b) und 2 (c) dargestellt, liegen in dem dargestellten Ausführungsbeispiel die Haltearme 70 der Fixiereinrichtung 7 und der Antriebsarm 22 bei einer Bewegung des Gehäuses 10 an einer Rückwand des Gehäuses 10 an.

Sobald das Gehäuse 10 vollständig ausgefahren ist, können der Antriebsarm 22 und die Haltearme 70 jeweils um die zugeordnete horizontale Achse 23 bzw. 71 verschwenkt werden, bis sich der Antriebsarm 22 und die Haltearme 70 jeweils zumindest im Wesentlichen parallel zu dem Kochfeld 5 erstrecken, wie in Fig. 2 (e) dargestellt.

Als nächstes kann ein in Fig. 2 (f) dargesteller Behälter 6 auf dem Kochfeld platziert und mittels der Fixiereinrichtung 7 fixiert werden, wobei zu diesem Zweck die Arme 7 entlang der Schwenkachse 71 verstellt werden. Weiter kann ein Werkzeug 4 oder ein Werkzeugpaar der Aufbewahrungsvorrichtung entnommen und mit dem Antriebsarm 22 gekoppelt werden. Der Antriebsarm 22 mit dem daran angebrachten Werkzeug 4 kann dann in vertikaler Richtung verstellt und der Deckel 24 auf dem Behälter 6 fixiert werden - wie in Fig. 2(f) dargestellt.

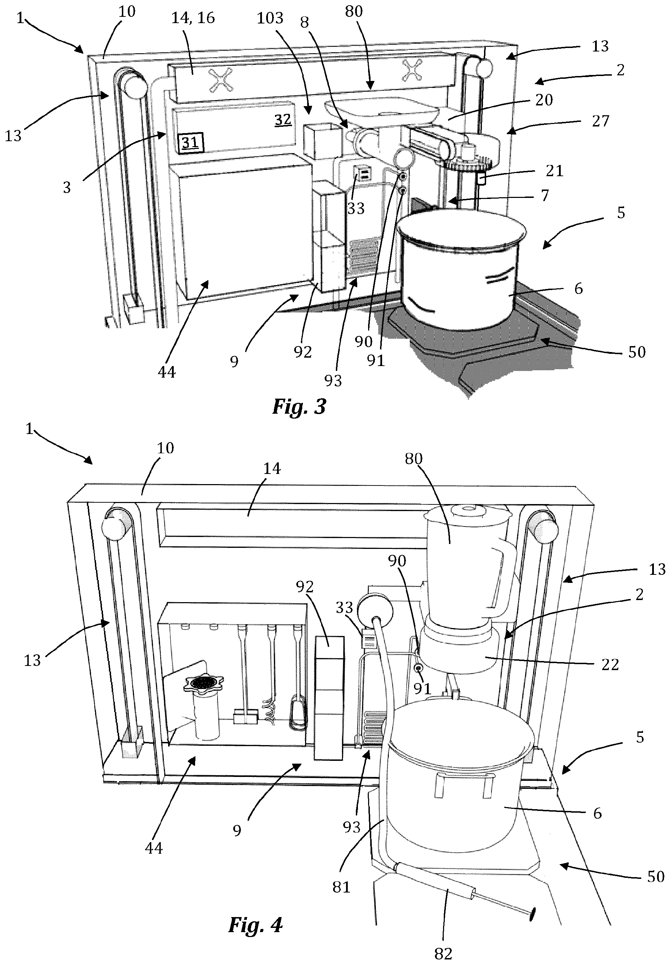

Fig. 3 zeigt in einer perspektivischen Darstellung ein zweites Ausführungsbeispiel eines Kochsystems 1 umfassend ein Basismodul 2, das einer Kochzone 50 eines Kochfelds 5 zugeordnet ist. Das Basismodul 2 weist einen Antriebsmotor 20 und einen Antriebsarm 22 mit einem mittels des Antriebsmotors 20 angetriebenen Planetengetriebe 27 auf, wobei ein in Fig. 3 nicht dargestelltes Werkzeug mit dem Planetengetriebe 27 mittels einer schematisch dargestellten Kupplung 21 koppelbar ist. Die Kupplung 21 ist beispielsweise als Steckkupplung gestaltet.

Das Basismodul 2 ist an einem Gehäuse 10 angeordnet, wobei das Gehäuse 10 zwischen einer Verstauposition und einer Gebrauchsposition in vertikaler Richtung verfahrbar ist. Zu diesem Zweck ist in dem dargestellten Ausführungsbeispiel an beiden Seiten des Gehäuses 10 jeweils ein Bandantrieb 13 vorgesehen. Die beiden Bandantriebe 13 sind in einer Ausgestaltung jeweils mittels eines eigenen Antriebsmotors (nicht dargestellt) synchron zueinander antreibbar. In anderen Ausgestaltungen ist eine Synchronisationswelle vorgesehen, mittels welcher beide Bandantriebe 13 antreibbar sind.

An dem dargestellten Gehäuse 10 ist eine Beleuchtung 14 und ein Dunstabzug 16 vorgesehen, welche in einer gemeinsamen Einheit zusammengefasst sind.

An dem Gehäuse 10 ist eine Fixiereinrichtung 7 vorgesehen, welche in dem dargestellten Ausführungsbeispiel einen Haken umfasst, in welchen ein nicht dargestellter Henkel des Behälters 6 einhängbar ist.

Das in Fig. 3 dargestellte Kochsystem 1 weist zudem eine Gerätekopplung 8 für ein Zusatzgerät 80 auf. Bei dem Zusatzgerät 80 handelt es sich beispielsweise um einen Fleischwolf. Es sind jedoch auch andere Zusatzgeräte denkbar. Die Gerätekopplung 8 umfasst in dem dargestellten Ausführungsbeispiel eine um eine horizontale, senkrecht zu einer Rückwand des Gehäuses 10 verlaufende Achse drehbare Antriebswelle. Für nicht im Gebrauch befindliche Zusatzgeräte 80 und/oder Werkzeuge 4 ist ab dem in Fig. 3 dargestellten Gehäuse 10 eine Aufbewahrungsvorrichtung 44 vorgesehen.

Im Unterschied zu dem in Fig. 1 dargestellten Ausführungsbeispiel 2 ist bei dem Kochsystem 1 gemäß Fig. 3 ein Steuerungsmodul 3 mit einer Steuereinheit 31 und einem Anzeigemodul 32 an dem Gehäuse 10 vorgesehen. Die Steuereinheit 31 dient dem Ansteuern des Antriebsmotors des Basismoduls 2. Die Steuereinheit 31 ist in einer Ausgestaltung mit einer Steuereinheit des Kochfelds 5 kommuniziert, sodass der Steuereinheit 31 ein Betriebsparameter der Kochzone 50 vorliegt und der Betriebsparameter für ein Ansteuern des Antriebsmotors des Basismoduls 2 auswertbar ist. In anderen Ausgestaltungen erfolgt eine Steuerung oder Regelung des Kochfelds 5 mittels der Steuereinheit 31. Mittels der Steuereinheit 31 sind der Antriebsmotor und die Kochzone 50 vollautomatisiert oder halbautomatisiert für eine Speisezubereitung in dem an der Kochzone 50 angeordneten Behälter 6 entsprechend einem Kochprogramm betreibbar. Das Kochprogramm ist mittels einer Nutzerschnittstelle vorgebbar. Als Nutzerschnittstelle dient in einer Ausgestaltung das Anzeigemodul 32, welches zu diesem Zweck eine berührungssensitive Oberfläche aufweist. Zudem ist in dem dargestellten Ausführungsbeispiel ein Hardwareanschluss 33 für einen Datenträger vorgesehen, insbesondere ein USB-Port.

Das in Fig. 3 dargestellte Kochsystem 1 umfasst weiter ein Überwachungsmodul 103. Mittels des Überwachungsmoduls 103 ist zumindest ein Vorhandensein oder Fehlen eines Behälters 6 in der Kochzone 50 feststellbar. Das Überwachungsmodul 103 umfasst zu diesem Zweck in einer Ausgestaltung ein nicht dargestelltes bildgebendes System.

Weiter weist das in Fig. 3 dargestellte Kochsystem 1 ein Wasserzugabemodul 9 mit zwei Wasserabgabeanschlüssen 90, 91 sowie ein damit verbundener Wasserbehälter 92 auf. Dabei ist ein Wasserabgabeanschluss 90 mittels eines schematisch dargestellten Durchlauferhitzers 93 mit dem Wasserbehälter 92 verbunden, sodass an diesem Wasserabgabeanschluss 90 Wasser mit einer erhöhten Temperatur und/oder als Wasserdampf zur Verfügung gestellt werden kann.

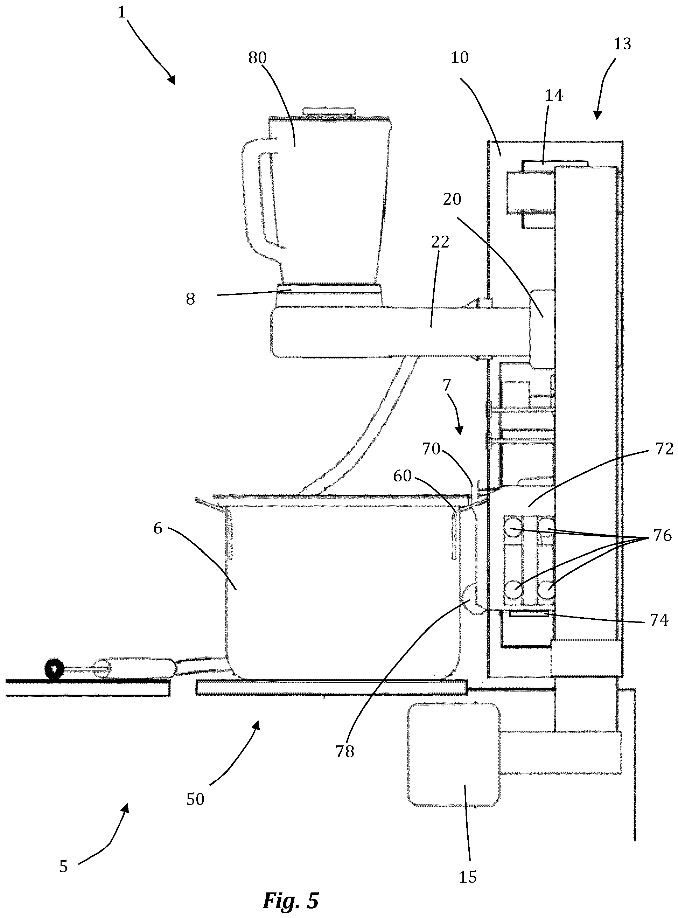

Fig. 4 und 5 zeigen in einer Frontansicht und einer Seitenansicht ein Kochsystem ähnlich Fig. 3, wobei für eine detaillierte Beschreibung bereits beschriebener Elemente auf oben verwiesen wird.

Im Unterschied zu dem Ausführungsbeispiel gemäß Fig. 3 sind bei dem in Fig. 4 und 5 dargestellten Ausführungsbeispiel weder ein Steuerungsmodul 3, noch ein Überwachungsmodul 103 vorgesehen. Eine Steuerung eines schematisch in Fig. 5 dargestellten Antriebsmotors 20 des Basismoduls 2 erfolgt dabei in einer Ausgestaltung mittels einer Steuereinheit des Kochfelds (vgl. Fig. 1).

Zudem ist im Unterschied zu dem Ausführungsbeispiel gemäß Fig. 3 an dem Gehäuse 10 lediglich eine Beleuchtung 14, nicht jedoch ein Dunstabzug vorgesehen. Als Dunstabzug dient dabei beispielweise eine herkömmliche Abzugshaube.

Der in Fig. 4 und 5 dargestellte Antriebsarm 22 weist an seiner, in der dargestellten Nutzposition von der Kochzone 50 abgewandten Seite eine Gerätekopplung 8 (vgl. Fig. 5) auf, an welcher in dem dargestellten Ausführungsbeispiel ein Zusatzgerät 80 in Form eines Mixers angebracht ist.

An der an dem Gehäuse 10 angeordneten Gerätekopplung 8 ist in dem dargestellten Ausführungsbeispiel eine flexible Welle 81 angebracht, an deren Ende ein rotierendes Werkzeug 82 angebracht ist. Dieses dient beispielsweise einem Aufschäumen eines Mediums in einem Behälter.

An der schematisch dargestellten Aufbewahrungsvorrichtung 44 ist in einer Ausgestaltung eine nicht dargestellte Klappe vorgesehen, mittels welcher die Aufbewahrungsvorrichtung verschließbar ist.

Wie in Fig. 5 erkennbar, sind Antriebsmotoren 15 für die an beiden Seiten des Gehäuses 10 vorgesehenen Bandantriebe 13 unterhalb einer Benutzeroberfläche des Kochfelds 5 angeordnet.

Wie weiter in Fig. 5 erkennbar, umfasst die dargestellte Fixiereinrichtung 7 einen Haken 70, in welchen ein Henkel 60 des Behälters 6 eingehängt ist. Der Haken 70 ist an einem vertikal verfahrenbaren Schlitten 72 vorgesehen. Der Schlitten 72 ist in dem dargestellten Ausführungsbeispiel Teil einer Wiegevorrichtung, welche weiter eine Wägezelle 74 aufweist. Der Schlitten 72 ist mittels mindestens zwei, in dem dargestellten Ausführungsbeispiel mittels vier symmetrisch angeordneter Rollen 76 verfahrbar gelagert. Zudem ist an dem Schlitten 72 unterhalb des Hakens 70 eine Stützrolle 78 für den Behälter 6 vorgesehen. Für einen Wiegevorgang wird der Behälter 6 mittels des Schlittens 72 in vertikaler Richtung relativ zu der Kochzone 50 bewegt, um den Behälter 6 von der Kochzone 50 anzuheben. Für eine Bewegung des Schlittens 72 ist der Schlitten 72 in einer Ausgestaltung dauerhaft oder temporär mit dem Antriebsarm 22 gekoppelt und mit diesem in vertikaler Richtung verstellbar. In einer anderen Ausgestaltung ist ein zusätzlicher Antriebsmotor für eine Verstellbewegung des Schlittens 72 vorgesehen. Aufgrund der Abstützung des Schlittens72 mittels der Wägezelle 74 und den Rollen 76 wird eine sichergestellt, dass etwaige Hebelkräfte eine Wiegefunktion nicht oder zumindest nicht wesentlich beeinträchtigen.

Es ist für den Fachmann offensichtlich, dass die in den Figuren dargestellten Werkzeuge 4 und Zusatzgeräte 80 lediglich beispielhaft sind und weder die Erfindung noch die dargestellten Ausführungsbeispiele auf eine Verwendung mit den abgebildeten Werkzeugen und/oder Zusatzgeräten beschränkt ist.

Die dargestellten Ausführungsbeispiele sind lediglich beispielhaft und es sind zahlreiche Abwandlungen zur Realisierung eines erfindungsgemäßen Kochsystems denkbar. Insbesondere können im Zusammenhang mit einem Ausführungsbeispiel diskutierte Elemente mit Elementen anderer Ausführungsbeispiele kombiniert werden, um so weitere Ausführungsbeispiele zu erhalten.

In einer Ausgestaltung ist ein zwei- oder mehrachsiger Antriebsarm vorgesehen, welcher zwei oder mehr über Gelenke verbundene Glieder aufweist.

Weiter sind außer den dargestellten Modulen und Elementen weitere Einrichtungen denkbar. In einer Ausgestaltung weist das Kochsystem ein Druckmodul auf, welches für eine Zubereitung von Gebäck oder Plätzchen nutzbar ist. Ein Druckmodul weist in einer Ausgestaltung einen Druckkopf auf, der es ermöglicht, eine Masse beispielsweise auf ein Backblech zu "drucken". Das Druckmodul umfasst in einer Ausgestaltung einen mehrachsigen Arm für eine hohe Flexibilität.

Alternativ oder zusätzlich ist in einer Ausgestaltung ein Wechselmodul vorgesehen, mittels welchem ein mit der Kupplung 21 verbindbares Werkzeug 4 und/oder ein mit der Gerätekupplung 8 verbindbares Zusatzgerät vollautomatisiert oder halbautomatisiert wechselbar ist.

## Patentansprüche

1. Kochsystem umfassend ein Basismodul (2) mit einem Antriebsmotor (20) und einem Antriebsarm (22), wobei der Antriebsarm (22) eine Kupplung (21) zur lösbaren Verbindung eines Werkzeugs (4) mit dem Antriebsmotor (20) aufweist, und wobei das Basismodul (2) einer Kochzone (50) eines Kochfelds (5) zugeordnet ist, sodass der Antriebsarm (22) oberhalb der Kochzone (50) anordenbar ist, um mittels eines mit der Kupplung des Antriebsarm (22) gekoppelten Werkzeugs (4) auf ein Medium in einem an der Kochzone (50) angeordneten Behälter (6) einzuwirken, **dadurch gekennzeichnet, dass** das Basismodul (2) an einem Gehäuse (10) angeordnet ist, wobei das (10) Gehäuse an dem Kochfeld (5) zwischen einer Verstauposition und einer Gebrauchsposition in vertikaler Richtung verfahrbar, in horizontaler Richtung ausziehbar und/oder um eine Schwenkachse einklappbar verbaut ist.

2. Kochsystem nach Anspruch 1, **dadurch gekennzeichnet, dass** der Antriebsarm (22) an dem Gehäuse (10) zwischen einer Ruheposition und einer Nutzposition bewegbar gelagert ist, wobei der Antriebsarm (22) insbesondere um eine horizontale Achse (23) verschwenkbar und in vertikaler Richtung verstellbar gelagert ist.

3. Kochsystem nach Anspruch 1 oder 2, **dadurch gekennzeichnet, dass** an dem Gehäuse (10) eine Fixiereinrichtung (7) vorgesehen ist, mittels welcher ein Behälter (6) in der Gebrauchsposition des Gehäuses (10) im Bereich der Kochzone (50) fixierbar ist.

4. Kochsystem nach Anspruch 1, 2 oder 3, **dadurch gekennzeichnet, dass** eine Wiegeeinrichtung umfassend einen vertikal verfahrbaren Schlitten (72) und eine Wägezelle (74) vorgesehen ist, wobei für ein Wiegen ein Behälter (6) mittels des Schlittens (72) in vertikaler Richtung relativ zu der Kochzone (50) bewegbar ist, um den Behälter (6) von der Kochzone (50) anzuheben.

5. Kochsystem nach einem der Ansprüche 1 bis 4, **dadurch gekennzeichnet, dass** das an dem Antriebsarm (22) ein Deckel (24) vorgesehen ist, mittels welchem in einer Nutzposition des Antriebsarms (22) ein an der Kochzone (50) angeordneter Behälter ganz oder teilweise abdeckbar ist.

6. Kochsystem nach einem der Ansprüche 1 bis 5, **dadurch gekennzeichnet, dass** das Kochsystem eine Gerätekupplung (8) für ein Zusatzgerät (80) ausgewählt aus der Gruppe umfassend einen Mixer, eine Saftpresse, eine flexible Welle, einen Gemüsezerkleinerer, einen Fleischwolf, einen Messerschärfer, einen Dosenöffner, aufweist.

7. Kochsystem nach einem der Ansprüche 1 bis 6, oder nach dem Oberbegriff des Anspruchs 1, **dadurch gekennzeichnet, dass** eine Steuereinheit (31, 54) zum Ansteuern des Antriebsmotors (20) vorgesehen ist, wobei an der Steuereinheit (31, 54) ein Betriebsparameter der Kochzone (50) vorliegt und der Betriebsparameter für ein Ansteuern des Antriebsmotors (20) auswertbar ist.

8. Kochsystem nach Anspruch 7, **dadurch gekennzeichnet, dass** mittels der Steuereinheit (31, 54) der Antriebsmotor (20) und die Kochzone (50) vollautomatisiert oder halbautomatisiert für eine Speisezubereitung in einem an der Kochzone (50) angeordneten Behälter (6) entsprechend einem Kochprogramm betreibbar sind, wobei vorzugsweise das Kochprogramm (6) mittels einer Nutzerschnittstelle vorgebbar ist.

9. Kochsystem nach Anspruch 7 oder 8, **dadurch gekennzeichnet, dass** ein Portioniermodul vorgesehen ist, wobei das Portioniermodul eine Kammer zur Bevorratung einer Zutat aufweist und wobei das Portioniermodul mittels der Steuereinheit (31, 54) betreibbar ist, um die bevorratete Zutat einem an der Kochzone (50) angeordneten Behälter (6) zuzugeben.

10. Kochsystem nach einem der Ansprüche 1 bis 9, **dadurch gekennzeichnet, dass** ein Überwachungsmodul (103), umfassend insbesondere eine optische Erfassungseinheit, vorgesehen ist, mittels welchem zumindest ein Vorhandensein oder Fehlen eines Behälters in der Kochzone feststellbar ist, wobei vorzugsweise mittels des Überwachungsmoduls ein Behältertyp und/oder eine Art, eine Menge, eine Feuchtigkeit, eine Temperatur und/oder eine weitere Beschaffenheit eines Mediums in dem Behälter feststellbar ist.

11. Kochsystem nach einem der Ansprüche 1 bis 10, **dadurch gekennzeichnet, dass** ein Anzeigemodul (32, 52) und/oder ein Hardwareanschluss (33) vorgesehen ist/sind.

12. Kochsystem nach einem der Ansprüche 1 bis 11, **dadurch gekennzeichnet, dass** ein Wechselmodul vorgesehen ist, mittels welchem ein mit der Kupplung verbindbares Werkzeug vollautomatisiert oder halbautomatisiert wechselbar ist.

13. Kochsystem nach einem der Ansprüche 1 bis 12, **dadurch gekennzeichnet, dass** ein Wasserzugabemodul (9) vorgesehen ist, umfassend einen Wasserabgabeanschluss (90, 91) sowie einen mit dem Wasserabgabeanschluss (90, 91) verbundenen Wasserbehälter und/oder einen mit dem Wasserabgabeanschluss (90, 91) verbundenen Wasseranschluss für eine zentrale Wasserversorgung.

14. Kücheneinrichtung umfassend ein Kochfeld mit einer Kochzone und ein Kochsystem nach einem der Ansprüche 1 bis 13, wobei das Basismodul der Kochzone zugeordnet ist, sodass der Antriebsarm oberhalb der Kochzone anordenbar ist, um mittels eines mit der Kupplung des Antriebsarm gekoppelten Werkzeugs auf ein Medium in einem an der Kochzone angeordneten Behälter einzuwirken.

15. Kücheneinrichtung nach Anspruch 14, **dadurch gekennzeichnet, dass** die Kochzone (50) eine Wiegeeinrichtung (55) aufweist.
